# EUROPÄISCHE PATENTSCHRIFT

(11) **EP 0 628 793 B1**
(45) Veröffentlichungstag und Bekanntmachung des Hinweises auf die Patenterteilung: **06.08.1997**
(21) Anmeldenummer: 94104747.4
(22) Anmeldetag: 25.03.1994
(51) Int. Cl.: G01F 23/28

(54) **Vorrichtung zur Messung, Kontrolle und/oder Feststellung eines Füllstandes in einem Behälter**
Device for the measurement, control and/or detection of a level in a container
Dispositif pour la mesure, contrôle et/ou détection d'un niveau dans un récipient

(30) Priorität: 05.06.1993 DE 4318750
(43) Veröffentlichungstag der Anmeldung: 14.12.1994
(73) Patentinhaber: Hermann, Eberhard, D-7888 Rheinfelden-Eichsel (DE)
(72) Erfinder: Hermann, Eberhard Franz, D-79618 Rheinfelden-Eichsel (DE)
(74) Vertreter: Schmitt, Hans, Dipl.-Ing.

(56) Entgegenhaltungen:
- WO-A-94/14047
- DE-A- 3 011 603
- DE-A- 3 140 938
- DE-A- 4 201 360
- FR-A- 2 444 931

## Beschreibung

Die Erfindung betrifft eine Vorrichtung zur Messung, Kontrolle und/oder Feststellung eines Füllstandes eines Füllgutes in einem Behälter mit einem ersten Schwingungselement, dessen Schwingungen durch Berührung mit Füllgut gedämpft werden, wobei das Schwingungselement in den Behälter hineinragt und rohrförmig ausgebildet ist und wobei in dem Hohlraum dieses ersten rohrförmigen Schwingungselementes ein zweites stabförmiges Schwingungselement angeordnet ist, welches die gleiche Resonanzfrequenz wie das erste Schwingungselement hat und in Gegenphase dazu schwingt, wobei das erste Schwingungselement an einer federnden Membran gelagert ist, die einen Schwingungsantrieb und einen Schwingungsabgriff aufweist und mit ihrem äußeren Rand mit einer Platte verbunden ist, welche das zweite stabförmige Schwingungselement trägt, so daß die Schwingungselemente zu einem Schwingungssystem verbunden sind.

Derartige Vorrichtungen sind beispielsweise aus DE-29 33 618, DE-30 11 603 C2 oder aus DE-31 40 938 C2 bekannt. Durch den Aufbau des Schwingungssystems wird erreicht, daß nahezu keine Schwingungsenergie zur Behälterwandung, durch welche die Vorrichtung in den Behälter hineinragt, verlorengeht, so daß diese Vorrichtungen eine große Empfindlichkeit auch gegenüber sehr leichten Füllgütern haben.

Es hat sich jedoch gezeigt, daß gerade die wegen der erforderlichen Schwingungen relativ weiche Membran, in deren Zentrum das erste Schwingungselement befestigt ist und die bei den Schwingungen elastisch deformiert wird und als Rückstellfeder wirkt, bei Überlastung bleibend verformt, das heißt verbogen werden kann, so daß die Vorrichtung unbrauchbar wird. Eine solche Überlastung kann vor allem dann auftreten, wenn die Vorrichtung im unteren Bereich eines Behälters zur Minimal-Füllstandskontrolle eingesetzt wird. In einem solchen Falle fließt Füllgut bei der Entleerung über das in das Behälterinnere hineinragende erste rohrförmige Schwingungselement und übt bei entsprechender Dichte des Füllgutes große Kräfte darauf aus, welche die Membran verbiegen können. Wird also bei einer solchen Entleerung oder gar bei einem plötzlichen Aufprall eines vorher verklumpten Füllgutes die Membran über ihre Elastizitätsgrenze verformt, kann das Meßgerät nicht mehr zutreffend messen oder völlig zerstört sein.

Es ist deshalb bekannt, solche Vorrichtungen im Inneren des Behälters durch Schutzbleche oder dergleichen von oben her abzuschirmen. Dies bedeutet jedoch einen höheren Montageaufwand und höhere Kosten und außerdem muß ein solches Schutzblech mit genügend großem Abstand oberhalb der Vorrichtung angeordnet sein, damit beim Füllen und anschließenden Entleeren nicht ein Freiraum um die eigentliche Meßvorrichtung und deren Schwingungselement entsteht, obwohl die wirkliche Füllung höher reicht. Auch ist nicht immer genügend Platz für eine solche Abschirmung vorhanden.

Zwar könnte man die Membrane verstärken, jedoch hätte dies nachteilige Folgen bezüglich ihres Schwingungsverhaltens, so daß diese Maßnahme in der Praxis nicht in Frage kommt.

Es besteht deshalb die Aufgabe, eine gattungsgemäße Vorrichtung zu schaffen, bei welcher Verformungen und Verbiegungen der Membrane durch das Füllgut vermieden werden können, ohne daß ein Abschirmblech erforderlich ist, ohne daß die zu dem Schwingungssystem gehörenden Teile, insbesondere das erste Schwingungselement selbst oder die Membrane in irgend einer komplizierten Weise geformt sein müssen und ohne daß das Schwingungsverhalten der Membrane in nachteiliger Weise eingeschränkt wird.

Die Lösung dieser scheinbar widersprüchlichen Aufgabe besteht darin, daß am Übergang von dem ersten rohrförmigen Schwingungselement zu der dieses tragenden Membran wenigstens ein die Membran und das erste Schwingungselement verbindender Aussteifungssteg angeordnet ist und daß die Verbindungslinie zwischen dem Schwingungsantrieb und dem Schwingungsabgriff an der Membran quer zu dem Versteifungssteg verläuft.

In einer Richtung wird also eine Aussteifung bewirkt, die entsprechenden Überlastungen entgegenwirkt, während quer dazu eine ungehinderte Schwingung der Membran und des Schwingungselementes möglich bleibt und die Schwingungen auch in dieser Richtung verlaufend erzeugt und abgegriffen werden.

Da die Belastung durch das Füllgut in aller Regel von oben nach unten erfolgt, ist es zweckmäßig, wenn die Verbindungslinie von dem Schwingungsantrieb zu dem Schwingungsabgriff und somit die Schwingungsbewegungen horizontal verlaufen. Der Schwingungsantrieb und der Schwingungsabgriff an der Membran haben also eine in Gebrauchsstellung etwa horizontale Verbindungslinie, so daß eine in einer horizontalen Ebene liegende Schwingung erzeugt wird. Demgemäß ist der Aussteifungssteg von oben nach unten bzw. umgekehrt orientiert und kann so dem abwärtsfließenden oder fallenden Füllgut und den davon ausgehenden Kräften entgegenwirken, ohne die Schwingungen zu behindern. Besonders zweckmäßig für die Aufnahme von Überlastungen ist es, wenn an der Oberseite und an der Unterseite des ersten Schwingungselementes jeweils ein von oben nach unten orientierter Aussteifungssteg vorgesehen ist. Dabei können die beiden Aussteifungsstege miteinander fluchtend in einer gemeinsamen vertikalen Ebene angeordnet sein, die gleichzeitig die vertikale Durchmesserebene des äußeren rohrförmigen Schwingungselementes ist. Das Schwingungselement kann also in vorteilhafter Weise eine einfache rohrförmige Gestaltung haben und trotzdem können von oben nach unten wirkende Kräfte erheblich größer sein, ohne daß es zu Verbiegungen der Membrane kommt.

Dabei ist es zweckmäßig, wenn wenigstens einer der Aussteifungsstege bis an den Rand der Membran und in den Bereich von deren rohrförmiger Halterung reicht. Somit können die von den Aussteifungsstegen aufgenommenen Kräfte in die Halterung der Membrane eingeleitet werden, also von der Membrane selbst weitgehend ferngehalten werden. In horizontaler Richtung hingegen ist die Membrane so weich, daß ihre Schwingungen in dieser Richtung praktisch nicht behindert werden. Einer vertikalen zusätzlichen Belastung durch Füllgut wird jedoch wirkungsvoll begegnet.

Der oder die Aussteifungsstege können mit der Außenseite der Halterung der Membran bündig abschließen oder diese geringfügig überragen. Somit wird in jedem Falle die Einleitung von Kräften über die Aussteifungsstege in die Halterung bewirkt.

Die Aussteifungsstege können flache Plättchen sein, deren axiale Erstreckung an der Außenseite des ersten Schwingungselementes etwa der radialen Abmessung an der Membran entspricht oder größer ist. Dabei können der/die Aussteifungsstege an der den Befestigungsstellen abgewandten Seite abgeschrägt oder abgerundet sein und die Abschrägung kann insbesondere etwa 45° betragen. Somit läßt sich bei geringstem Materialaufwand eine effektive Verstärkung der Membrane und des Schwingungssystemes in der durch Füllgut bewirkten Belastungsrichtung erreichen, ohne daß das Schwingungsverhalten quer dazu zur Durchführung von Kontrollen und dergleichen gestört wird.

Bei bisherigen Vorrichtungen dieser Art ist es üblich, den notwendigen Frequenzabgleich der Schwingungselemente dadurch zu erreichen, daß die Membrane auf einer Drehmaschine dünner gedreht wird, bis die Eigenfrequenz erreicht ist. Durch den/die erfindungsgemäßen Aussteifungsstege ist dies jedoch nicht möglich.

Eine Ausgestaltung der Erfindung besteht deshalb darin, daß an der Seite der Membran, von welcher das rohrförmige Schwingungselement und die Aussteifungsstege ausgehen, neben den Aussteifungsstegen und/oder an der geschlossenen Stirnseite des ersten Schwingungselementes Materialverdickungen vorgesehen sind, die zur Anpassung des Systemes an die Eigenfrequenz ganz oder teilweise - zum Beispiel durch Feilen - abtragbar sind. Trotz der Aussteifungsstege ist durch diese Maßnahme ein Frequenzabgleich möglich.

Dabei kann die Dicke der Membrane selbst von vorneherein geringer sein, als es für die Resonanzschwingung der Schwingungselemente erforderlich ist, und sie kann durch die Materialverdickung über das für die Resonanzschwingung erforderliche Maß verstärkt sein. Wird nun die Materialverdickung allmählich abgetragen, kann die Resonanzschwingung eingestellt werden.

Die Materialverdickung kann die Form von einer oder mehreren Rippen haben, die insbesondere in Schwingungsrichtung auf der Membran verlaufen können. Eine derartige Rippe, die zweckmäßigerweise über einen Durchmesserbereich verläuft, läßt sich mit einer Feile bequem und schnell genügend abtragen, um den Frequenzabgleich herzustellen.

Zusätzlich oder stattdessen kann die Materialverdickung am Ende des Schwingers als in vertikaler Richtung verlaufende Rippe(n) ausgebildet sein. Somit läßt sich auch an dieser Stelle der Frequenzabgleich durch Materialabtragung bewirken, ohne daß der oder die Aussteifungsstege dabei stören.

Die Materialverdickungen oder Rippen an der Membran können von ihrer größten Querschnittsabmessung zu der Membran hin und/oder an der Stirnseite des äußeren Schwingungselementes zu dieser hin abgeschrägt sein. Dadurch kann vermieden werden, daß Füllgut auf den in Gebrauchsstellung horizontal verlaufenden Bereichen dieser Rippen liegenbleibt und das Schwingungsverhalten bei einem Meßvorgang verfälscht.

Es wird also in scheinbar widersprüchlicher Weise die Membrandicke dünner gewählt, als dies eigentlich zutreffend wäre und ferner wird quer über die Membrane wenigstens eine Verstärkungsrippe angeordnet, die zweckmäßigerweise in der Schwingungsebene, also horizontal, liegt und eine Dicke hat, die ausreichend ist, um die Rückstellkraft der Membran beim Schwingungsvorgang so weit zu verstärken, daß die gewünschte Resonanzfrequenz erreicht wird. Für den in der Praxis auftretenden Toleranzausgleich wird dabei diese Verstärkungsrippe auf der Membran etwas stärker als erforderlich gewählt, so daß die Resonanzfrequenz des äußeren oder ersten Schwingungselementes zunächst zu hoch liegt. Ein Frequenzabgleich kann dann leicht durch Reduzierung der Höhe der Verstärkungsrippe vorgenommen werden, indem diese mit einigen Feilenstrichen oder durch Abschleifen bearbeitet wird.

Insgesamt ergibt sich eine Vorrichtung, die vertikalen Kräften durch das Füllgut standhalten kann, ohne daß die Membrane bleibend verformt wird und ohne daß es eines Abschirmbleches oder dergleichen bedarf, bei der aber dennoch die Schwingungen - in horizontaler Richtung - praktisch ungestört verlaufen können, um einen genügend genauen Meßvorgang zu ermöglichen. Dabei kann in vorteilhafter Weise das erste Schwingungselement als einfaches rohrförmiges Schwingelement mit kreisförmigem Querschnitt ausgeführt sein, also insgesamt eine preiswerte, aus bewährten Teilen bestehende Vorrichtung Verwendung finden.

Nachstehend sind Ausführungsbeispiele der Erfindung anhand der Zeichnung näher beschrieben. Es zeigt in zum Teil schematisierter Darstellung:
- Fig.1: eine in der unteren Hälfte im Längsschnitt dargestellte Seitenansicht einer erfindungsgemäßen Vorrichtung, bei welcher das Innere, zweite Schwingungselement ein Biegeschwinger ist,
- Fig.2: eine im halben Längsschnitt dargestellte Draufsicht der Vorrichtung gemäß Fig.1,
- Fig.3: eine zur Hälfte im Längsschnitt dargestellte Seitenansicht einer erfindungsgemäßen Vorrichtung, bei welcher der innere Schwinger ein Drehschwinger ist, sowie
- Fig.4: eine zur Hälfte im Längsschnitt dargestellte Draufsicht der Vorrichtung gemäß Fig.3.

Die beiden im ganzen mit 1 bezeichneten, bezüglich ihres inneren Schwingers unterschiedlichen Vorrichtungen zur Messung, Kontrolle und/oder Feststellung eines Füllstandes eines Füllgutes in einem Behälter haben in der nachfolgenden Beschreibung bezüglich der übereinstimmenden Teile auch dieselben Bezugszahlen.

In beiden Ausführungsbeispielen hat die Vorrichtung 1 ein erstes Schwingelement 2, dessen Schwingungen durch Berührung mit Füllgut gedämpft werden, wobei das erste Schwingungselement 2 in den nur bezüglich eines Stückes seiner Wand 3 dargestellten Behälter hineinragt und rohrförmig ausgebildet ist. In dem Hohlraum dieses ersten rohrförmigen Schwingungselementes 2 ist ein zweites stabförmiges Schwingungselement 4 angeordnet, welches die gleiche Resonanzfrequenz wie das erste Schwingungselement 2 hat und bei Gebrauch in Gegenphase dazu schwingt.

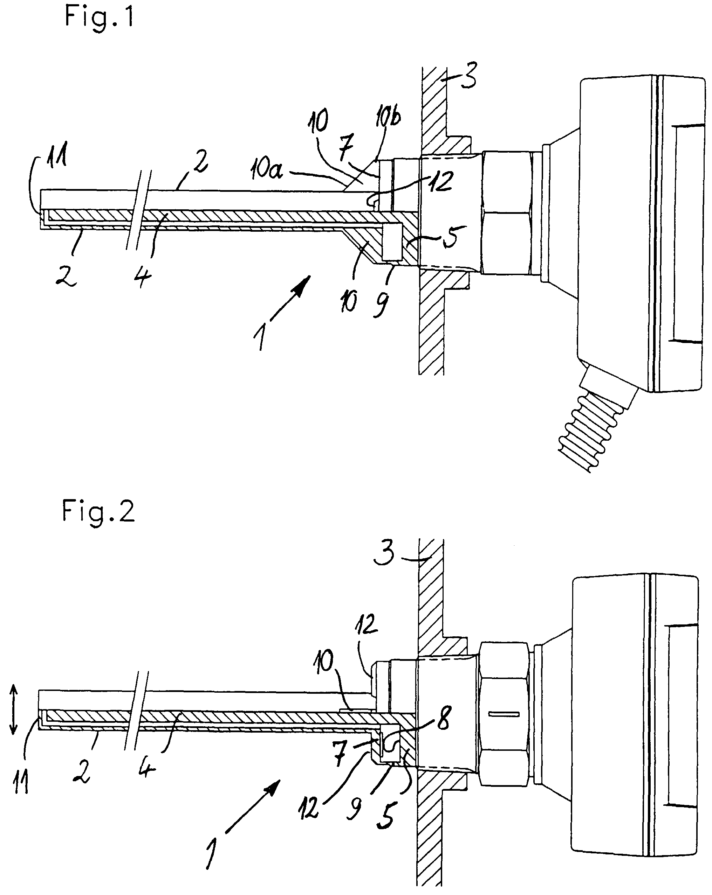

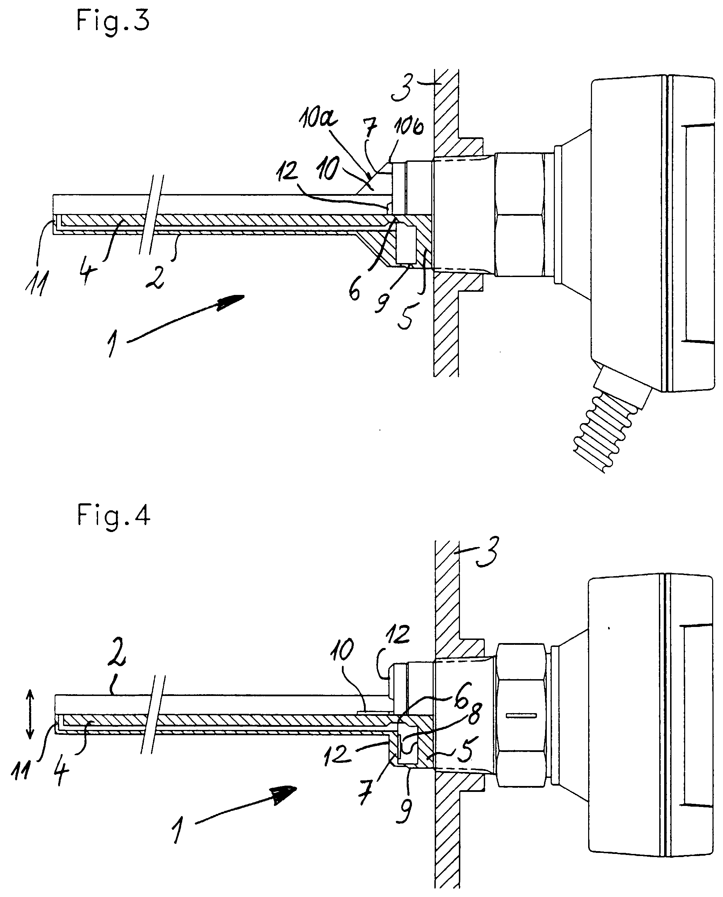

Der Unterschied zwischen den beiden Ausführungsbeispielen besteht nun darin, daß bei der Anordnung gemäß Fig.1 und 2 dieses zweite Schwingungselement 2 an einer steifen Platte 5 fest eingespannt ist, also als Biegeschwinger wirkt, während beim Ausführungsbeispiel gemäß den Figuren 3 und 4 zwischen der steifen Platte 5 und dem stabförmigen Schwingungselement 4 ein Drehpunkt 6 in Form einer Materialschwächung vorgesehen ist, so daß in diesem Falle das zweite Schwingungselement 4 als Drehschwinger wirkt.

Das erste Schwingungselement 2 ist an einer federnden Membran 7 gelagert bzw. befestigt, die einen Schwingungsantrieb 8 (Fig.2 und 4) und einen diesem an der Mitte gegenüberliegenden, in der Zeichnung nicht näher dargestellten Schwingungsabgriff aufweist und mit ihrem äußeren Rand mit der im wesentlichen steifen Platte 5 über einen rohrförmigen Halter 9 verbunden ist. Die beiden Schwingungselemente 2 und 4 sind somit zu einem Schwingungssystem verbunden, bei welchem die durch die Schwingungen verursachten Auslenkungen derart gegeneinander kompensiert werden, daß praktisch keine Schwingungsenergie an die Behälterwand 3 abgegeben wird.

Am Übergang von dem ersten rohrförmigen Schwingungselement 2 zu der dieses tragenden Membrane 7 sind die Membrane 7 und das erste Schwingungselement 2 verbindende Aussteifungsstege 10 angeordnet und zwar in einer solchen Orientierung, daß die Verbindungslinie zwischen dem Schwingungsantrieb 8 und dem Schwingungsabgriff an der Membrane 7 quer zu diesen Aussteifungsstegen 10 verläuft. Gemäß Fig.2 und 4 verläuft die Verbindungslinie von dem Schwingungsantrieb 8 zu dem Schwingungsabgriff und somit die Schwingungsbewegung horizontal und gemäß Fig.1 und 3 ist an der Oberseite und an der Unterseite des ersten Schwingungselementes 2 jeweils ein von oben nach unten orientierter Aussteifungssteg 10 vorgesehen. Auch anhand von Fig.2 und 4 wird deutlich, daß die Aussteifungsstege 10 miteinander fluchtend in einer gemeinsamen vertikalen Ebene angeordnet sind, die gleichzeitig die vertikale Durchmesserebene des äußeren, einen Kreisquerschnitt aufweisenden rohrförmigen Schwingungselementes 2 ist. Da die Aussteifungsstege 10 eine gewisse Stärke oder Dicke haben, läuft genaugenommen ihre Mitte in der erwähnten vertikalen Durchmesserebene.

In vertikaler Richtung ist also eine Aussteifung des Schwingungssystemes vorhanden, die zusätzlichen Belastungen durch Füllgut entgegenwirken kann, während gleichzeitig in horizontaler Richtung die Membrane 7 weich bleibt und die erforderlichen Schwingungen für den Meßvorgang durchführen kann. Es werden also zwei scheinbar widersprüchliche Maßnahmen verbunden, nämlich die Membrane weiterhin schwingungsfähig gehalten und trotzdem gegen zu starke Belastungen ausgesteift.

Die Aussteifungsstege 10 verlaufen gemäß Fig.1 und 3 bis an den Rand der Membran 7 und den Bereich von deren rohrförmiger Halterung 9 und schließen mit der Außenseite oder dem Außenumfang der Halterung 9 bündig ab. Somit können von diesen Aussteifungsstegen 10 aufgenommene Belastungskräfte in die rohrförmige Halterung 9 und die steife Platte 5 eingeleitet werden, das heißt die Membrane 7 kann gegen diese Kräfte geschützt werden, die in aller Regel etwa von oben nach unten durch das Füllgut erzeugt werden.

Die Aussteifungsstege 10 sind gemäß Fig.2 und 4 flache Plättchen, deren axiale Erstreckung an der Außenseite des ersten Schwingungselementes 2 etwa der radialen Abmessung an der Membran 7 entspricht oder etwas größer ist. Dabei sind die Aussteifungsstege an der den Befestigungsstellen abgewandten Seite 10a abgeschrägt, wobei die Abschrägung etwa 45° beträgt. Ist die axiale Erstreckung des Aussteifungssteges 10 an dem ersten Schwingungselement 2 etwas größer als die radiale Abmessung der Membran 7, ergibt sich an dem obersten bzw. untersten Ende der Membrane noch ein kurzer geradliniger Übergang 10b zu der Halterung 9.

Durch Fertigungstoleranzen bedingt kann es dazu kommen, daß die Resonanzschwingungen des Systemes nicht genau erreicht werden. Es ist deshalb vorgesehen, daß die Dicke der Membran 7 geringer ist, als es für die Resonanzschwingung der Schwingungselemente 2 und 4 erforderlich ist. Zusätzlich sind an der Seite der Membran 7, von welcher das rohrförmige Schwingungselement 2 und die Aussteifungsstege 10 ausgehen, neben den Aussteifungsstegen 10 Materialverdickungen vorgesehen, die zur Anpassung des Systemes an die Eigenfrequenz ganz oder teilweise - zum Beispiel durch Abfeilen oder Abschleifen - abtragbar sind. Stattdessen oder zusätzlich könnten auch an der geschlossenen Stirnplatte oder Stirnseite 11 des ersten Schwingungselementes 2 eine oder mehrere solche Materialverdickungen vorgesehen sein. Durch eine solche Materialverdickung ist also die Resonanzfrequenz des äußeren oder ersten Schwingungselementes 2 zu hoch und kann durch Materialabtragungen auf den richtigen Wert eingestellt oder abgeglichen werden.

Die Materialverdickung hat im Ausführungsbeispiel die Form von einer beidseits der Aussteifungsstege 10 verlaufenden Verstärkungsrippe 12, die beidseits in Schwingungsrichtung auf der Membran 7 verläuft. Die Verstärkungsrippe 12 verläuft dabei gemäß Fig.1 und 3 über die horizontale Mitte der Membran 7. In Fig.2 und 4 erkennt man, daß dabei diese Verstärkungsrippe 12 beidseits der Aussteifungsstege von der Außenseite des Schwingungselementes 2 bis zum Rand der Membran 7 verläuft. Da sie in Schwingungsrichtung angeordnet ist, kann sie sich entsprechend auf das Schwingungsverhalten auswirken.

Dabei erkennt man in Fig.1 und 3, daß diese Rippe 12 an der Membran 7 von ihrer größten Querschnittsabmessung oder Dicke zu der Membran 7 hin abgeschrägt ist, so daß sich auf dieser horizontal verlaufenden Verstärkungsrippe 12 - beidseits der Aussteifungsstege 10 - kein Füllgut ablagern kann. Die Verstärkungsrippen 12 ermöglichen also einen einfachen Frequenzabgleich. Dabei werden diese Verstärkungsrippen 12 durch diesen Frequenzabgleich und ihr teilweises Abtragen so dimensioniert, daß die Rückstellkraft der Membran 7 aufgrund dieser Verstärkungsrippen 12 beim Schwingungsvorgang so weit verstärkt wird, daß die gewünschte Resonanzfrequenz erreicht wird.

Durch eine sinnvolle Aussteifung und Verstärkung wird also insgesamt eine Vorrichtung 1 geschaffen, bei welcher ein preiswertes einfaches Schwingungssystem aus einem ersten rohrförmigen Schwingungselement 2 mit kreisförmigem Querschnitt und einem dazu passenden zweiten Schwingungselement 4 Überbelastungen durch Füllgut standhalten und trotzdem mit der gewünschten Frequenz schwingen kann.

Somit kann auf ein Abschirmblech oberhalb der Vorrichtung 1 oder eine aufwendige besondere Formgebung der Schwingungselemente verzichtet werden. Trotz der Aussteifungsstege 10, die ein Abdrehen der Außenseite der Membrane 7 nicht mehr erlauben, ist aber dennoch ein einfacher Frequenzabgleich mit Hilfe von Verstärkungsrippen 12 möglich, die beidseits der Versteifungsstege 10 auf dem horizontalen Durchmesser der Membrane 7 verlaufen.

Die Vorrichtung 1 zum Messen, Kontrollieren und/oder Feststellen, ob in einem Behälter ein Füllgut ist, hat ein erstes Schwingungselement 2, dessen Schwingungen durch Berührung mit Füllgut gedämpft werden, wobei dieses Schwingungselement 2 die Form eines Rohres mit Kreisringquerschnitt hat und in seinen Hohlraum ein zweites stabförmiges Schwingelement 4 ragt, das die gleiche Resonanzfrequenz wie das erste Schwingungselement 2 hat und in Gegenphase dazu schwingt. Das erste Schwingungselement 2 ist dabei an einer federnden Membrane 7 gelagert, die einen Schwingungsantrieb 8 und einen Schwingungsabgriff aufweist, wobei Schwingungsantrieb 8 und Schwingungsabgriff einander an der zentralen Mitte der Membrane 7 auf einem Durchmesser gegenüberliegen. Der äußere Rand der Membrane 7 ist über einen rohrförmigen Halter 9 mit einer steifen Platte 5 verbunden, die das zweite stabförmige Schwingungselement 4 trägt, so daß die Schwingungselemente 2 und 4 zu einem Schwingungssystem verbunden sind, bei welchem praktisch keine Schwingungsenergie auf die Wandung 3 des Behälters übertragen wird. Am Übergang von dem ersten rohrförmigen Schwingungselement 2 zu der dieses tragenden Membrane 7 ist gegen zu starke Belastungen und eventuelle Verformungen der Membrane 7 ein die Membran 7 und das Schwingungselement 2 verbindender Aussteifungssteg 10 angeordnet. Die Verbindungslinie zwischen dem Schwingungsantrieb 8 und dem Schwingungsabgriff an der Membran 7 verläuft quer zu dem Aussteifungssteg 10 bzw. seiner Wirkrichtung, also horizontal, während der oder die Aussteifungsstege 10 vertikal entgegen Belastungen durch das Füllgut angeordnet sind.

## Patentansprüche

1. Vorrichtung (1) zur Messung, Kontrolle und/oder Feststellung eines Füllstandes eines Füllgutes in einem Behälter mit einem ersten Schwingungselement (2), dessen Schwingungen durch Berührung mit Füllgut gedämpft werden, wobei das erste Schwingungselement (2) in den Behälter hineinragt und rohrförmig ausgebildet ist und wobei in dem Hohlraum dieses ersten rohrförmigen Schwingungselementes (2) ein zweites stabförmiges Schwingungselement (4) angeordnet ist, welches die gleiche Resonanzfrequenz wie das erste Schwingungselement (2) hat und in Gegenphase dazu schwingt, wobei das erste Schwingungselement (2) an einer federnden Membran (7) gelagert ist, die einen Schwingungsantrieb (8) und einen Schwingungsabgriff aufweist und mit ihrem äußeren Rand mit einer Platte verbunden ist, welche das zweite stabförmige Schwingungselement trägt, so daß die Schwingungselemente zu einem Schwingungssystem verbunden sind, **dadurch gekennzeichnet**, daß am Übergang von dem ersten, rohrförmigen Schwingungselement (2) zu der dieses tragenden Membran (7) wenigstens ein die Membran (7) und das erste Schwingungselement (2) verbindender Aussteifungssteg (10) angeordnet ist, und daß die Verbindungslinie zwischen dem Schwingungsantrieb (8) und dem Schwingungsabgriff an der Membran (7) quer zu dem Aussteifungssteg (10) verläuft.

2. Vorrichtung nach Anspruch 1, dadurch gekennzeichnet, daß die Verbindungslinie von dem Schwingungsantrieb (8) zu dem Schwingungsabgriff und somit die Schwingbewegungen in Gebrauchsstellung horizontal verlaufen.

3. Vorrichtung nach Anspruch 1 oder 2, dadurch gekennzeichnet, daß an der Oberseite und an der Unterseite des ersten Schwingungselementes (2) jeweils ein von oben nach unten orientierter Aussteifungssteg (10) vorgesehen ist.

4. Vorrichtung nach Anspruch 1 oder 2, dadurch gekennzeichnet, daß die beiden Aussteifungsstege (10) miteinander fluchtend in einer gemeinsamen vertikalen Ebene angeordnet sind, die gleichzeitig die vertikale Durchmesserebene des äußeren rohrförmigen Schwingungselementes (2) ist.

5. Vorrichtung nach einem der Ansprüche 1 bis 4, dadurch gekennzeichnet, daß wenigstens einer der Aussteifungsstege (10) bis an den Rand der Membran (7) und in den Bereich von deren rohrförmiger Halterung (9) reicht.

6. Vorrichtung nach einem der Ansprüche 1 bis 5, dadurch gekennzeichnet, daß der oder die Aussteifungsstege mit der Außenseite der Halterung (9) der Membran bündig abschließen oder diese geringfügig überragen.

7. Vorrichtung nach einem der Ansprüche 1 bis 6, dadurch gekennzeichnet, daß die Aussteifungsstege (10) flache Plättchen sind, deren axiale Erstreckung an der Außenseite des ersten Schwingungselementes (2) etwa der radialen Abmessung an der Membran (2) entspricht oder größer ist.

8. Vorrichtung nach einem der Ansprüche 1 bis 7, dadurch gekennzeichnet, daß der/die Aussteifungsstege an der den Befestigungsstellen abgewandten Seite abgeschrägt oder abgerundet sind und die Abschrägung insbesondere etwa 45° beträgt.

9. Vorrichtung nach einem der Ansprüche 1 bis 8, dadurch gekennzeichnet, daß an der Seite der Membran (7), von welcher das rohrförmige Schwingungselement (2) und die Aussteifungsstege (10) ausgehen, neben den Aussteifungsstegen (10) und/oder an der geschlossenen Stirnseite (11) des ersten Schwingungselementes (2) Materialverdickungen vorgesehen sind, die zur Anpassung des Systemes an die Eigenfrequenz ganz oder teilweise - zum Beispiel durch Feilen - abtragbar sind.

10. Vorrichtung nach einem der Ansprüche 1 bis 9, dadurch gekennzeichnet, daß die Dicke der Membran (7) selbst geringer ist, als es für die Resonanzschwingung der Schwingungselemente (2,4) erforderlich ist, und daß sie durch die Materialverdickung über das für die Resonanzschwingung erforderliche Maß verstärkt ist.

11. Vorrichtung nach einem der Ansprüche 1 bis 10, dadurch gekennzeichnet, daß die Materialverdickung die Form von einer oder mehreren Verstärkungsrippen (12) hat, die insbesondere in Schwingungsrichtung auf der Membran (7) verlaufen.

12. Vorrichtung nach einem der Ansprüche 1 bis 11, dadurch gekennzeichnet, daß die Materialverdickung am Ende des Schwingers als in vertikaler Richtung verlaufende Rippe(n) ausgebildet ist(sind).

13. Vorrichtung nach einem der Ansprüche 1 bis 12, dadurch gekennzeichnet, daß die Materialverdickungen oder Rippen (12) an der Membran (7) von ihrer größten Querschnittsabmessung zu der Membran (7) hin und/oder an der Stirnseite des äußeren Schwingungselementes zu dieser hin abgeschrägt sind.

14. Vorrichtung nach einem der Ansprüche 1 bis 13, dadurch gekennzeichnet, daß die Verstärkungsrippe (12) über die horizontale Mitte der Membrane (7) verläuft.

## Claims

1. A device (1) for the measurement, control and/or detection of a level of a filling material in a container, including a first vibration element (2) whose vibrations are damped by contact with filling material, whereby the first vibration element (2) projects into the container and is of tubular configuration, and whereby arranged in the cavity of said first tubular vibration element (2) is a second rod-shaped vibration element (4) which has the same resonance frequency as the first vibration element (2) and vibrates in phase opposition thereto, whereby the first vibration element (2) is supported at a springy diaphragm (7) having a vibration drive (8) and a vibration pick-up and the outer diaphragm edge is connected to a plate carrying the second rod-shaped vibration element, so that the vibration elements are connected to form a vibratory system, **characterized in that** arranged at the transition from the first tubular vibration element (2) to the diaphragm (7) carrying the latter is at least one stiffening web (10) connecting the diaphragm (7) and the first vibration element (2), and that the connecting line between the vibration drive (8) and the vibration pick-up at the diaphragm (7) extends transversely of the stiffening web (10).

2. A device as claimed in claim 1, characterized in that the connecting line from the vibration drive (8) to the vibration pick-up and hence the vibratory movements run horizontally in the position of use.

3. A device as claimed in claim 1 or claim 2, characterized in that one stiffening web (10) oriented from top to bottom is provided at the upper side and one at the underside of the first vibration element (2).

4. A device as claimed in claim 1 or claim 2, characterized in that the two stiffening webs (10) are arranged in alignment in a common vertical plane which is simultaneously the vertical diametrical plane of the outer tubular vibration element (2).

5. A device as claimed in any one of claims 1 to 4, characterized in that at least one of the stiffening webs (10) extends to the edge of the diaphragm (7) and into the region of tubular mount (9) of the diaphragm.

6. A device as claimed in any one of claims 1 to 5, characterized in that the stiffening web or webs end even with the outside of the diaphragm mount (9) or project slightly beyond the same.

7. A device as claimed in any one of claims 1 to 6, characterized in that the stiffening webs (10) are flat laminae whose axial extent at the outside of the first vibration element (2) corresponds approximately to the radial dimension at the diaphragm (7) or is larger.

8. A device as claimed in any one of claims 1 to 7, characterized in that at the side opposite the fastening points, the stiffening web or webs are sloped or rounded and the slope is particularly about 45°.

9. A device as claimed in any one of claims 1 to 8, characterized in that thickenings of material are provided at that side of the diaphragm (7) from which the tubular vibration element (2) and the stiffening webs (10) depart, beside the stiffening webs (10) and/or at the closed end face (11) of the first vibration element (2), said thickenings of material being wholly or partly removable - for example by filing - to adapt the system to the natural frequency.

10. A device as claimed in any one of claims 1 to 9, characterized in that the thickness of the diaphragm (7) itself is slighter than is necessary for the resonance vibration of the vibration elements (2, 4) and is increased by the thickening of material beyond the measure necessary for the resonance vibration.

11. A device as claimed in any one of claims 1 to 10, characterized in that the thickening of material takes the form of one or more reinforcing ribs (12) which run on the diaphragm particularly in the direction of vibration.

12. A device as claimed in any one of claims 1 to 11, characterized in that the thickening of material at the end of the vibrator take(s) the form of (a) rib(s) running in the vertical direction.

13. A device as claimed in any one of claims 1 to 12, characterized in that the thickenings of material or ribs (12) on the diaphragm (7) are sloped from their greatest cross-sectional dimension towards the diaphragm (7) and/or at the end face of the outer vibration element are sloped towards the same.

14. A device as claimed in any one of claims 1 to 13, characterized in that the reinforcing rib (12) runs over the horizontal centre of the diaphragm (7).

## Revendications

1. Dispositif (1) pour mesurer, contrôler et/ou déterminer le niveau d'un produit dans un récipient, comprenant un premier élément vibrant (2) dont les vibrations sont amorties par le contact avec le produit, sachant que le premier élément vibrant (2) pénètre dans le récipient et est réalisé de façon tubulaire et que dans l'espace creux de ce premier élément vibrant tubulaire (2) est disposé un second élément vibrant en forme de barre (4) qui présente la même fréquence de résonance que le premier élément vibrant (2) et vibre en phase opposée par rapport à celui-ci, sachant que le premier élément vibrant (2) est monté sur une membrane faisant ressort (7) qui présente un générateur de vibrations (8) et un capteur de vibrations et qui est reliée par son bord extérieur à une plaquette portant le second élément vibrant en forme de barre, de sorte que les éléments vibrants sont reliés entre eux pour former un système vibrant, caractérisé en ce qu'à la transition entre le premier élément vibrant tubulaire (2) et la membrane (7) portant ce dernier est placée au moins une aile de renforcement (10), et en ce que la ligne de liaison entre le générateur de vibrations (8) et le capteur de vibrations, qui est située sur la membrane (7), s'étend transversalement à l'aile de renforcement ou de raidissement (10).

2. Dispositif selon la revendication 1, caractérisé en ce que la ligne de liaison entre le générateur de vibrations (8) et le capteur de vibrations, et donc les vibrations s'étendent horizontalement en position d'utilisation.

3. Dispositif selon la revendication 1 ou 2, caractérisé en ce que sur le dessus et le dessous du premier élément vibrant (2) est chaque fois prévue une aile de renforcement (10) orientée de haut en bas.

4. Dispositif selon la revendication 1 ou 2, caractérisé en ce que les deux ailes de renforcement (10) sont disposées en alignement dans un plan vertical commun qui constitue simultanément le plan vertical diamétral le l'élément vibrant tubulaire extérieur (2).

5. Dispositif selon l'une des revendications 1 à 4, caractérisé en ce qu'au moins l'une des ailes de renforcement (10) s'étend jusqu'au bord de la membrane (7) et jusque dans la zone de la fixation tubulaire (9) de cette dernière.

6. Dispositif selon l'une des revendications 1 à 5, caractérisé en ce que l'aile ou les ailes de renforcement se terminent en affleurement avec la face extérieure de la fixation (9) ou dépassent légèrement de celle-ci.

7. Dispositif selon l'une des revendications 1 à 6, caractérisé en ce que les ailes de renforcement (10) sont des plaquettes plates dont l'étendue axiale sur la face extérieure du premier élément vibrant (2) correspond approximativement à la dimension radiale au niveau de la membrane (2) ou est supérieure à celle-ci.

8. Dispositif selon l'une des revendications 1 à 7, caractérisé en ce que l'aile / les ailes de renforcement sont chanfreinées ou arrondies sur le côté opposé aux points de fixation, et en ce que le chanfrein s'élève notamment à environ 45°.

9. Dispositif selon l'une des revendications 1 à 8, caractérisé en ce que sur le côté de la membrane (7) dont partent l'élément vibrant tubulaire (2) et les ailes de renforcement (10), à côté des ailes de renforcement (10) et/ou sur la face frontale fermée (11) du premier élément vibrant (2), sont prévus des épaississements pouvant être totalement ou partiellement enlevés - par exemple en les limant - pour adapter le système à la fréquence propre.

10. Dispositif selon l'une des revendications 1 à 9, caractérisé en ce que l'épaisseur de la membrane (7) elle-même est inférieure à l'épaisseur requise pour l'oscillation de résonance des éléments vibrants (2, 4), et en ce qu'elle est renforcée par l'épaississement de l'épaisseur nécessaire pour l'oscillation de résonance.

11. Dispositif selon l'une des revendications 1 à 10, caractérisé en ce que l'épaississement a la forme d'une ou de plusieurs nervures de renforcement (12) qui s'étendent sur la membrane (7), notamment dans la direction de déplacement des vibrations.

12. Dispositif selon l'une des revendications 1 à 11, caractérisé en ce que l'épaississement est réalisé à l'extrémité du vibrateur en tant que nervure(s) s'étendant verticalement.

13. Dispositif selon l'une des revendications 1 à 12, caractérisé en ce que les épaississements ou nervures (12) sont biseauté(e)s sur la membrane (7) de leur section la plus importante vers la membrane (7) et/ou sur la face frontale de l'élément vibrant extérieur vers celle-ci.

14. Dispositif selon l'une des revendications 1 à 13, caractérisé en ce que la nervure de renforcement (12) passe par le milieu horizontal de la membrane (7).
